# FASCICULE DE BREVET EUROPEEN

(11) **EP 1 849 347 B1**
(45) Date de publication et mention de la délivrance du brevet: **01.10.2008**
(21) Numéro de dépôt: 07106440.6
(22) Date de dépôt: 18.04.2007
(51) Int. Cl.: A01D 34/535

(54) **Rotor équilibré pour épareuse et procédé d'équilibrage d'un tel rotor**
Ausgewuchteter Rotor für Böschungsmäher und Auswuchtverfahren eines solchen Rotors
Balanced rotor for mower and process of balancing of such a rotor

(30) Priorité: 28.04.2006 FR 0651514
(43) Date de publication de la demande: 31.10.2007
(73) Titulaire: Kuhn-Audureau S.A., 85260 La Copechagnière (FR)
(72) Inventeur: Guillou, M. Nicolas, 44140 Montbert (FR); Peterschmitt, Mickael, 85300 Le Perrier (FR)
(74) Mandataire: Andres, Jean-Claude

(56) Documents cités:
- EP-A- 1 297 737
- US-A- 1 084 121
- US-A- 3 050 927

## Description

L'invention concerne un rotor d'épareuse et un procédé d'équilibrage de la masse dudit rotor.

L'entretien des talus de routes, de chemins de fer, de canaux et des accotements en général est réalisé avec des épareuses. Ce type de machine comporte une tête de coupe mobile portée par un bras orientable et supportée par un véhicule, lequel véhicule pouvant être par exemple un tracteur.

La tête de coupe déportée des épareuses, tout comme l'outil déporté d'autres machines, doit pouvoir suivre précisément la surface de travail et esquiver les obstacles lorsqu'ils se présentent pour ne pas bloquer la machine dans son avancée et ne pas endommager les outils de travail. En raison de ces différentes contraintes l'outil de coupe de l'épareuse et l'ensemble déporté doivent être aussi léger que possible, ce qui induit des matériaux résistants mais légers et des éléments configurés de manière optimale.

L'épareuse comporte une tête de coupe constituée principalement par un rotor muni de fléaux ou de marteaux, un rouleau palpeur, un moteur hydraulique et une carcasse supportant les différents éléments et reliée au véhicule porteur.

Afin de déchiqueter les branchages, les buissons et couper les végétaux, le rotor inséré dans la tête de coupe fonctionne en rotation très rapide, ce rotor est généralement de petit diamètre.

En fonctionnement le rotor de l'épareuse, comme tous les éléments en rotation rapide, doit être assez précisément équilibré afin que les vibrations et les déformations induites par les balourds n'entraînent pas des dommages, voire même la destruction, de la tête de coupe.

Il est donc nécessaire de prévoir, lors de la fabrication de la machine, un équilibrage du rotor afin que l'épareuse puisse être utilisée durablement de manière optimale. De même, si les outils de coupe sont remplacés ou si des modifications susceptibles de modifier la répartition des masses sur le rotor sont effectuées, un nouvel équilibrage peut s'avérer nécessaire.

La difficulté et le problème à résoudre résident dans le fait d'ajouter des masses d'équilibrage sur le rotor de l'épareuse de manière à obtenir un résultat satisfaisant, c'est à dire un équilibrage aussi précis que possible.

Plusieurs techniques d'addition de masses d'équilibrage sont connues :
- Il a été essayé l'ajout de masses soudées sur le tube du rotor.
- Il a aussi été réalisé le clouage d'un support fileté, avec un cloueur à poudre par exemple, qui permet de visser des masses d'équilibrages. Après vérifications, ces masses sont solidarisées avec le tube du rotor par une opération de soudage.

Mais, selon ces deux premières méthodes l'opération de soudage provoque des balourds :
- D'une part en raison de la dilatation qui empêche une vérification avant refroidissement.
- D'autre part en raison des retraits de soudure. Ce balourd étant définitif il doit être ultérieurement corrigé, ce qui nécessite donc une opération supplémentaire et un temps de travail conséquent.

- Il a aussi été envisagé dans le document EP 1 297 737 A1 de disposer deux disques sensiblement aux deux extrémités du rotor, d'un diamètre plus grand que celui du tube du rotor, qui reçoivent des masses d'équilibrages.

Selon cette troisième méthode les disques sont proéminents et sont sujets à une usure dégradant l'équilibrage.

Les techniques connues d'équilibrage du rotor de l'épareuse ne sont donc pas satisfaisantes.

L'invention a donc pour objectif de résoudre les principales difficultés identifiées en proposant une nouvelle façon d'équilibrer le rotor des épareuses.

La présente invention concerne un rotor d'épareuse comprenant un tube sur lequel sont disposées des oreilles permettant le montage des fléaux utiles pour couper et broyer les végétaux, ledit rotor d'épareuse étant caractérisé en ce qu'il comporte au moins une masse d'équilibrage fixée sur au moins une desdites oreilles. Cette masse d'équilibrage est fixée par soudure sur la partie externe de l'oreille, hors d'atteinte des fléaux. De préférence, la masse d'équilibrage est positionnée autour d'un écrou servant à la fixation des fléaux.

L'invention concerne aussi un procédé d'équilibrage de la masse d'un rotor d'épareuse caractérisé par le fait de placer au moins une masse d'équilibrage sur au moins une des oreilles. Le procédé consiste aussi à répartir des masses sur différentes oreilles en fonction de l'équilibrage à réaliser.

Les principaux avantages du rotor d'épareuse équilibré selon l'invention et du procédé d'équilibrage sont les suivants :
- Les masses d'équilibrage étant soudées sur les oreilles du rotor et non sur le tube lui-même, la géométrie dudit tube n'est plus affectée par l'opération d'équilibrage.
- La localisation de la masse d'équilibrage sur l'oreille étant connue exactement, le calcul de ladite masse nécessaire pour l'équilibrage peut être effectué très précisément.
- Du fait du placement des masses sur les oreilles et non plus sur le rotor lui-même, c'est à dire des masses plus éloignées de l'axe de rotation du rotor, une plus faible masse totale est nécessaire pour réaliser l'équilibrage.
- Les masses d'équilibrage correspondent à des pièces d'épaisseurs et de formes variables selon l'ampleur du balourd à corriger, un équilibrage précis est donc aisément réalisable.
- Un démontage des masses utilisées pour l'équilibrage et une modification de la répartition de celles-ci sont aisément réalisables, lors d'une opération de maintenance sur le rotor, par exemple.

D'autres caractéristiques et avantages de l'invention se dégageront de la description qui va suivre en regard des dessins annexés qui ne sont donnés qu'à titre d'exemples non limitatifs. Dans ces dessins :
- La figure 1 est une vue générale d'un rotor d'épareuse comportant un équilibrage des masses selon l'invention.
- La figure 2 est une vue éclatée montrant le positionnement d'une masse d'équilibrage sur une oreille du rotor de l'épareuse.

Etant donné la vitesse élevée des rotors d'épareuse, sensiblement de l'ordre de 3000 tours par minute, il est indispensable de les équilibrer. Les moyens d'équilibrage ci-après décrits satisfont à la norme ISO 1940 relative à l'équilibrage des pièces de machines à broyer et de machines agricoles.

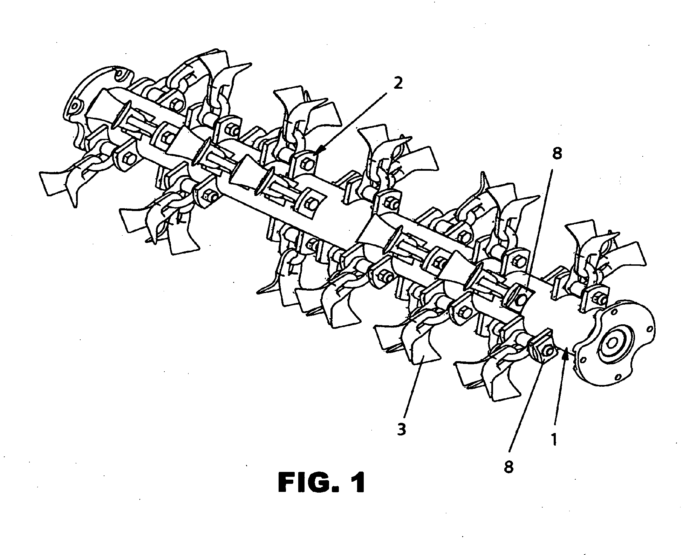

Comme cela ressort de la figure 1, le rotor de l'épareuse comporte un tube 1 sur lequel sont fixées, régulièrement réparties sur la périphérie et sur la longueur, des oreilles 2.

Les oreilles 2 agencées par deux servent de supports pour des outils de coupe tels que des fléaux 3, utilisés par paires dans cet exemple. Lesdits fléaux 3 sont articulés sur les oreilles 2 pour disposer d'une certaine liberté de rotation.

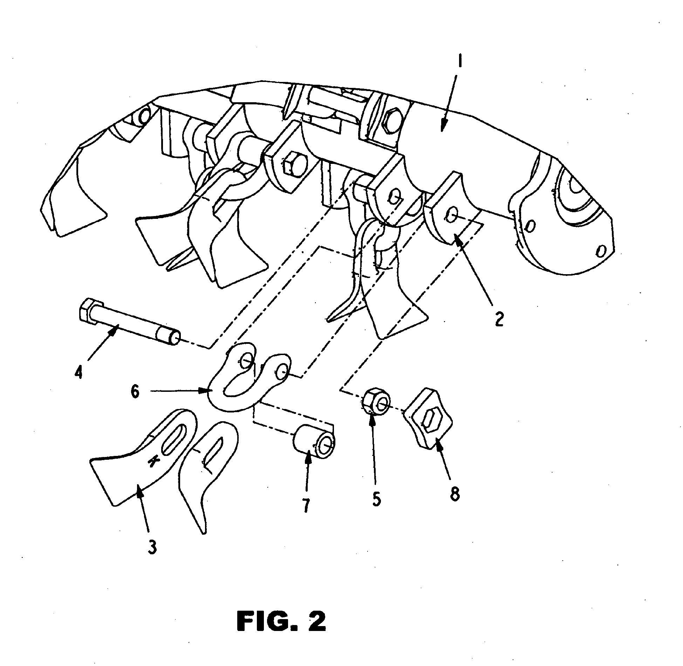

La figure 2 montre plus en détail les différentes composantes permettant la fixation des fléaux 3 sur les oreilles 2 et les moyens permettant aux fléaux 3 de disposer d'une certaine latitude de mouvement.

Plus précisément deux oreilles 2 disposées sur le rotor 1 sont percées de manière à permettre le passage d'une vis 4 servant d'axe de rotation pour les fléaux 3. Ladite vis 4 traverse également une manille 6 dont les deux branches sont disposées entre les deux oreilles 2, laquelle manille supporte les deux fléaux 3.

Il peut être également envisagé, même si cela est moins favorable, que la vis 4 serve directement de support pour les fléaux 3.

Avantageusement, pour limiter l'usure de la vis et la déformation de la manille 6, il est ajouté une entretoise 7 entre les deux branches de la manille. Ladite entretoise 7 est coaxiale avec la vis 4.

La vis 4 et donc les fléaux 3 sont maintenus en place au moyen d'un écrou 5 disposé sur la face extérieure de l'une des oreilles 2.

Selon l'invention une masse d'équilibrage 8 est disposée sur une oreille 2. Il a été jugé particulièrement avantageux de placer ladite masse d'équilibrage 8 autour de l'écrou 5 correspondant. Elle assure ainsi en plus l'immobilisation en rotation de l'écrou 5, ce qui permet le démontage de la vis 4 avec une seule clé.

Plusieurs éléments d'équilibrage 8 de même nature mais de tailles et de masses différentes peuvent être répartis sur différentes oreilles 2 en fonction des nécessités.

Le positionnement préféré de la masse d'équilibrage 8 est sur la partie externe des oreilles 2, hors d'atteinte des outils de coupe, de manière à éviter que lors du fonctionnement les fléaux 3, ne viennent dégrader la pièce.

De manière à positionner précisément la pièce sur l'oreille 2 la masse d'équilibrage 8 est percée d'une ouverture hexagonale juste supérieure à la dimension de l'écrou 5. Une telle ouverture permet un placement exact de la masse d'équilibrage 8 par rapport à l'axe du tube 1 du rotor et donc une estimation rigoureuse de son impact sur le moment d'inertie du rotor en fonctionnement, ce qui autorise de fait une grande précision de calcul de ladite masse à employer pour corriger un balourd.

La forme globale de la masse d'équilibrage 8 est parallélépipédique, tel que cela est illustré sur les figures 1 et 2, toutefois n'importe quelle forme peut être imaginée pour cet élément sans sortir du cadre de l'invention.

Afin d'éviter un déplacement de la masse d'équilibrage 8 ou un enlèvement accidentel lors d'une opération de maintenance, ce qui aurait pour conséquence d'annihiler l'équilibrage, cette masse 8 est avantageusement soudée sur l'oreille 2.

Usuellement l'équilibrage du rotor selon l'invention nécessite l'emploi de plusieurs masses 8 en fonction des positionnements des oreilles 2 sur la périphérie du tube 1. Les masses 8 sont donc combinées selon une décomposition vectorielle pour obtenir le résultat d'équilibrage souhaité.

De préférence selon l'invention le rotor d'épareuse comporte au moins deux masses d'équilibrage 8 positionnées sur des oreilles 2 différentes. Le choix desdites oreilles 2 est déterminé par le calcul pour un équilibrage optimum.

Le total des masses 8 pour l'équilibrage utilisé sur plusieurs oreilles 2 est généralement situé autour de 300 grammes par côté d'équilibrage.

La figure 1 présente par exemple deux masses d'équilibrage 8 disposées sur des oreilles 2 voisines.

L'invention concerne aussi le procédé d'équilibrage de la masse d'un rotor d'épareuse comprenant un tube 1 sur lequel sont disposées des oreilles 2 permettant le montage des fléaux 3 utiles pour couper et broyer les végétaux, le procédé étant caractérisé par le fait de placer au moins une masse d'équilibrage 8 sur au moins une oreille 2. Plus précisément dans le procédé au moins une masse 8 est soudée sur une oreille 2.

Le procédé consiste aussi à placer des masses d'équilibrage 8 sur plusieurs oreilles 2 et de répartir lesdites masses 8 sur différentes oreilles 2 en fonction de l'équilibrage à réaliser.

Ladite masse d'équilibrage 8 est avantageusement placée autour d'un écrou 5 chargé de maintenir la vis 4 en position entre les deux oreilles 2, laquelle vis 4 sert soit d'axe pour les fléaux 3 soit à maintenir une manille 6 portant les fléaux 3.

Plusieurs variantes du rotor d'épareuse équilibré selon l'invention sont possibles quant aux masses 8 employées pour l'équilibrage, aux matériaux utilisés pour constituer ces masses 8 et à la manière de fixer lesdites masses 8 sur les oreilles 2 disposées autour du tube 1 du rotor.

Il peut être envisagé de fixer la masse d'équilibrage 8 de différentes manières sur l'oreille 2. Par exemple, la masse 8 pourrait se présenter sous la forme d'une vis supplémentaire insérée dans une ouverture filetée réalisée dans l'oreille 2 et ajustée en longueur en fonction de la valeur d'équilibrage souhaitée.

Il peut aussi être envisagé de réaliser une vis 4 plus longue que nécessaire, spécialement prévue pour cette application, c'est à dire débordant largement de l'écrou 5 et ajustée en longueur en fonction de la masse souhaitée. Il peut également être envisagé de placer la masse 8 entre l'écrou 5 et l'oreille 2 sans sortir du cadre de l'invention.

Même si le fait de souder la masse d'équilibrage 8 est le moyen préféré de fixation sur l'oreille 2, en raison de l'aspect définitif de l'équilibrage, de nombreuses autres possibilités techniquement réalisables existent et sont comprises dans l'invention.

Le placement de la masse d'équilibrage 8 est prévu de préférence autour de l'écrou 5, de manière à favoriser le positionnement de la pièce et donc l'obtention précise de l'équilibrage souhaité, cependant d'autres placements sont possibles sans sortir du cadre de l'invention.

Le nombre de masses d'équilibrage 8 placées sur des oreilles 2 différentes n'est pas limitatif, pour une simplicité de mise en oeuvre et des raisons économiques il est toutefois souhaitable de limiter l'équilibrage à quelques points spécifiques plutôt que d'effectuer une répartition de la masse corrective sur de nombreux points.

Bien entendu, l'invention n'est pas limitée aux modes de réalisation décrits et représentés à titre d'exemples, mais est définie par les revendications.

## Revendications

1. Rotor d'épareuse comprenant un tube (1) sur lequel sont disposées des oreilles (2) permettant le montage des fléaux (3) utiles pour couper et broyer les végétaux, ledit rotor d'épareuse est ***caractérisé en ce qu'***il comporte au moins une masse d'équilibrage (8) fixée sur au moins une oreille (2).

2. Rotor d'épareuse selon la revendication 1, ***caractérisé en ce que*** au moins une masse d'équilibrage (8) est fixée sur la partie externe de l'oreille (2), hors d'atteinte des fléaux (3).

3. Rotor d'épareuse selon la revendication 2, ***caractérisé en ce que*** au moins une masse d'équilibrage (8) est fixée par soudure sur l'oreille (2).

4. Rotor d'épareuse selon la revendication 3, ***caractérisé en ce que*** la masse d'équilibrage (8) est percée d'une ouverture hexagonale pour permettre son placement, avant sa fixation, autour d'un écrou (5).

5. Rotor d'épareuse selon la revendication 4, ***caractérisé en ce que*** l'écrou (5) est utilisé pour maintenir une vis (4) supportant les fléaux (3) ou pour maintenir une vis (4) de maintien d'une manille (6) supportant les fléaux (3).

6. Rotor d'épareuse selon la revendication 4, ***caractérisé en ce que*** au moins une masse d'équilibrage (8) disposée autour d'un écrou (5) est soudée sur une oreille (2).

7. Rotor d'épareuse selon l'une quelconque des revendications précédentes, ***caractérisé en ce qu'***il comprend au moins deux masses d'équilibrage (8) positionnées sur des oreilles (2) différentes.

8. Procédé d'équilibrage de la masse d'un rotor d'épareuse comprenant un tube (1) sur lequel sont disposées des oreilles (2) permettant le montage des fléaux (3) utiles pour couper et broyer les végétaux, le procédé étant ***caractérisé par le fait*** de placer au moins une masse d'équilibrage (8) sur au moins une oreille (2).

9. Procédé d'équilibrage de la masse d'un rotor d'épareuse selon la revendication 8, ***caractérisé par le fait qu***'au moins une masse d'équilibrage (8) est soudée sur une oreille (2).

10. Procédé d'équilibrage de la masse d'un rotor d'épareuse selon l'une quelconque des revendications 8 ou 9, ***caractérisé par le fait*** de placer des masses d'équilibrage (8) sur plusieurs oreilles (2) et de répartir lesdites masses (8) sur différentes oreilles (2) en fonction de l'équilibrage à réaliser.

11. Procédé d'équilibrage de la masse d'un rotor d'épareuse selon l'une quelconque des revendications 8 à 10, ***caractérisé par le fait* que** chaque masse d'équilibrage (8) portée par une oreille (2) est percée d'une ouverture hexagonale et placée autour d'un écrou (5) relié à une vis (4) servant d'axe pour les fléaux (3) ou servant à maintenir une manille (6) portant les fléaux (3).

## Claims

1. Mower rotor comprising a tube (1) on which are arranged lugs (2) making it possible to mount the flails (3) used to cut and chop up the plants, the said mower rotor being ***characterized in* that** it comprises at least one balancing mass (8) fixed to at least one lug (2).

2. Mower rotor according to Claim 1, ***characterized in* that** at least one balancing mass (8) is fixed to the external part of the lug (2) out of reach of the flails (3).

3. Mower rotor according to Claim 2, ***characterized in* that** at least one balancing mass (8) is fixed to the lug (2) by welding.

4. Mower rotor according to Claim 3, ***characterized in* that** the balancing mass (8) is pierced with a hexagonal hole to allow it to be positioned around a nut (5) before it is fastened.

5. Mower rotor according to Claim 4, ***characterized in* that** the nut (5) is used to hold a screw (4) supporting the flails (3) or to hold a screw (4) holding a shackle (6) supporting the flails (3).

6. Mower rotor according to Claim 4, ***characterized in* that** at least one balancing mass (8) positioned around a nut (5) is welded to a lug (2).

7. Mower rotor according to any one of the preceding claims, ***characterized in* that** it comprises at least two balancing masses (8) positioned on different lugs (2).

8. Method of balancing the mass of a mower rotor comprising a tube (1) on which are arranged lugs (2) making it possible to mount the flails (3) used to cut and chop up the plants, the method being ***characterized in* that** at least one balancing mass (8) is positioned on at least one lug (2).

9. Method of balancing the mass of a mower rotor according to Claim 8, ***characterized in* that** at least one balancing mass (8) is welded to a lug (2).

10. Method of balancing the mass of a mower rotor according to either one of Claims 8 or 9, ***characterized in* that** balancing masses (8) are positioned on several lugs (2) and the said masses (8) are distributed across various lugs (2) to suit the balancing that needs to be performed.

11. Method of balancing the mass of a mower rotor according to any one of Claims 8 to 10, ***characterized in* that** each balancing mass (8) borne by a lug (2) is pierced with a hexagonal hole and positioned around a nut (5) connected to a screw (4) that acts as an axis for the flails (3) or is used to hold a shackle (6) bearing the flails (3).

## Patentansprüche

1. Rotor eines Böschungsmähers mit einem Rohr (1), auf dem Ösen (2) angeordnet sind, die die Montage der Dreschflegel (3) ermöglichen, die nützlich sind, um die Pflanzen zu mähen und zu häckseln, wobei der Rotor des Böschungsmähers ***dadurch gekennzeichnet* ist, dass** er mindestens eine Auswuchtmasse (8) umfasst, die auf mindestens einer Öse (2) befestigt ist.

2. Rotor eines Böschungsmähers nach Anspruch 1, ***dadurch gekennzeichnet,* dass** mindestens eine Auswuchtmasse (8) am äußeren Teil der Öse (2) außer Reichweite der Dreschflegel (3) befestigt ist.

3. Rotor eines Böschungsmähers nach Anspruch 2, ***dadurch gekennzeichnet,* dass** mindestens eine Auswuchtmasse (8) durch Schweißen auf der Öse (2) befestigt ist.

4. Rotor eines Böschungsmähers nach Anspruch 3, ***dadurch gekennzeichnet,* dass** die Auswuchtmasse (8) mit einer hexagonalen Öffnung durchbohrt ist, um ihre Anordnung um eine Mutter (5) vor ihrer Befestigung zu ermöglichen.

5. Rotor eines Böschungsmähers nach Anspruch 4, ***dadurch gekennzeichnet,* dass** die Mutter (5) verwendet wird, um eine Schraube (4) zu halten, die die Dreschflegel (3) trägt, oder um eine Schraube (4) zum Halten eines Bügels (6), der die Dreschflegel (3) trägt, zu halten.

6. Rotor eines Böschungsmähers nach Anspruch 4, ***dadurch gekennzeichnet,* dass** mindestens eine Auswuchtmasse (8), die um eine Mutter (5) angeordnet ist, auf eine Öse (2) geschweißt ist.

7. Rotor eines Böschungsmähers nach irgend einem der vorhergehenden Ansprüche, ***dadurch gekennzeichnet,* dass** er mindestens zwei Auswuchtmassen (8) umfasst, die auf unterschiedlichen Ösen (2) positioniert sind.

8. Verfahren zur Auswuchtung der Masse eines Rotors eines Böschungsmähers mit einem Rohr (1), auf dem Ösen (2) angeordnet sind, die die Montage der Dreschflegel (3) ermöglichen, die nützlich sind, um die Pflanzen zu mähen und zu häckseln, wobei das Verfahren ***dadurch gekennzeichnet* ist, dass** mindestens eine Auswuchtmasse (8) auf mindestens einer Öse (2) angeordnet wird.

9. Verfahren zur Auswuchtung der Masse eines Rotors eines Böschungsmähers nach Anspruch 8, ***dadurch gekennzeichnet,* dass** mindestens eine Auswuchtmasse (8) auf eine Öse (2) geschweißt ist.

10. Verfahren zur Auswuchtung der Masse eines Rotors eines Böschungsmähers nach irgend einem der Ansprüche 8 oder 9, ***dadurch gekennzeichnet,* dass** Auswuchtmassen (8) auf mehreren Ösen (2) angeordnet werden, und dass die Massen (8) auf verschiedenen Ösen (2) in Abhängigkeit von der durchzuführenden Auswuchtung verteilt werden.

11. Verfahren zur Auswuchtung der Masse eines Rotors eines Böschungsmähers nach irgend einem der Ansprüche 8 bis 10, ***dadurch gekennzeichnet,* dass** jede von einer Öse (2) getragene Auswuchtmasse (8) mit einer hexagonalen Öffnung durchbohrt und um eine Mutter (5) angeordnet ist, die mit einer Schraube (4) verbunden ist, die als Achse für die Dreschflegel (3) oder zum Halten eines Bügels (6), der die Dreschflegel (3) trägt, dient.
